## Europäisches Patentamt
## European Patent Office
## Office européen des brevets

(19)

(11) Veröffentlichungsnummer: **0 164 023**
A2

# EUROPÄISCHE PATENTANMELDUNG

(12)

(21) Anmeldenummer: 85106287.7

(22) Anmeldetag: 22.05.85

(51) Int. Cl.⁴: **H 01 R 4/26**, H 01 R 13/15

(30) Priorität: 26.05.84 SE 8402875

(43) Veröffentlichungstag der Anmeldung: 11.12.85
Patentblatt 85/50

(84) Benannte Vertragsstaaten: **CH DE FR GB IT LI NL**

(71) Anmelder: **ASEA AB, S-721 83 Västeras (SE)**

(72) Erfinder: **Classon, Ake, Ing., Box 9544, S-771 00 Ludvika (SE)**
Erfinder: **Ekwall, Olle, Dipl.-Ing., Plommonstigen 27, S-771 00 Ludvika (SE)**
Erfinder: **Paulsson, Anders, Dipl.-Ing., Fredsgatan 48, S-771 00 Ludvika (SE)**

(74) Vertreter: **Boecker, Joachim, Dr.-Ing., Rathenauplatz 2-8, D-6000 Frankfurt a.M. 1 (DE)**

(54) Anordnung zur elektrischen Verbindung zweier Leiter.

(57) In einer Gleitkontaktverbindung zwischen zwei Leitern (1, 2) erfolgt die Stromübertragung über ein Kontaktelement (3), das in einer Nut (4) in der Kontaktfläche des einen Leiters (2) angeordnet ist. Das Kontaktelement (3) besteht aus einem federnden Draht, der schraubenförmig oder in ähnlicher Weise gewickelt ist. Vor der Montage in der Nut (4) ist das Kontaktelement zum Beispiel durch Pressen so geformt worden, dass sämtliche Drahtwindungen eine gewisse Neigung gegenüber der Längsachse des Kontaktelementes aufweisen.

ASEA AB
S-721 83 Västeras/Schweden

Anordnung zur elektrischen Verbindung zweier Leiter

Die vorliegende Erfindung betrifft eine Anordnung zur elektrischen Verbindung zweier Leiter gemäß dem Oberbegriff des Anspruches 1.

In $SF_6$-isolierten Schaltanlagen müssen die Leiterverbindungen so ausgebildet sein, daß die Leiter eine gewisse Bewegungsfreiheit in ihrer Längsrichtung haben, um Wärmedehnungen der Leiterteile ausgleichen zu können und um die Teile der Schaltanlage auf einfache Weise montieren und demontieren zu können. Außerdem werden durch eine gewisse Flexibilität der Anlagenteile die Anforderungen an die Fertigungstoleranzen geringer.

Die Verbindung von Leitern in Schaltanlagen der vorgenannten Art wird meistens mit Hilfe mehrerer konzentrisch zum Leiter angeordneter, federbelasteter Kontaktfinger vorgenommen, die in der Regel an dem einen Leiterende fest montiert sind und das andere, als Kontaktstift ausgebildete Leiterende umschließen. Eine Kontaktanordnung dieser Art hat eine verhältnismäßig große Bauhöhe.

Um den Durchmesser der umgebenden Kapselung klein zu halten, ist man daher in Schaltanlagen mit Aluminiumleitern gezwungen, in den Leiterverbindungen Kontaktstifte aus Kupfer zu verwenden, die durch Widerstands- oder Friktionsschweißung an dem Aluminiumleiter fixiert werden. Derartige Kontaktanordnungen sind verhältnismäßig teuer. Wenn man dagegen Kontaktstifte aus Aluminium verwenden würde, müßte man bei gegebenem Nennstrom etwa dreimal soviele Kontaktfinger wie bei der Verwendung von Kupfer vorsehen, um den Leistungsumsatz pro Kontaktstelle auf einem annehmbaren Wert zu halten. Dies bedeutet, daß der Stiftdurchmeser und damit der Durchmesser der Kapselung vergrößert werden müßte, was erheblich höhere Kosten und auch andere Nachteile mit sich bringt.

Es ist bekannt, bei Leiterverbindungen in $SF_6$-Schaltanlagen als Kontaktelement zwischen den Leiterenden ein Band aus versilberter Berylliumbronze mit auf der Oberfläche des Bandes aufgestanzten, federnden Kontaktlamellen zu verwenden, die im Prinzip in der aus der DE-AS 1 286 170 bekannten Weise ausgebildet sind. Eine solche Kontaktanordnung hat eine niedrige Bauhöhe und viele parallele Kontaktpunkte. Sie kann daher auch bei Kontaktstiften aus Aluminium verwendet werden. Ein Nachteil dieser Leiterverbindungen besteht in den hohen Anforderungen an die Fertigungsgenauigkeit, da der effektive Federweg des Kontaktbandes verhältnismäßig klein ist, (einige Hundertstel Millimeter). Diese Ausführungsform ist daher nicht für Leiterverbindungen geeignet, bei denen neben einer axialen Verschiebbarkeit auch eine gewisse radiale Verschiebbarkeit mit Winkelabweichung zwischen den verbundenen Leitern möglich sein muß.

Der Erfindung liegt die Aufgabe zugrunde, eine Anordnung der eingangs genannten Art zu entwickeln, die in ihrem Aufbau einfach und kostensparend ist, eine axiale Beweglichkeit zwischen den Leitern zuläßt, eine niedrige Bauhöhe hat und derart elastisch ist, daß sie auch eine gewisse radiale Verschiebung der Leiter gegeneinander mit einer Winkelabweichung zwischen den Leitern zuläßt. Ferner soll die Leiterverbindung einen hohen Betriebsstrom führen können und kurzschlußsicher sein.

Zur Lösung dieser Aufgabe wird eine Anordnung gemäß dem Oberbegriff des Anspruches 1 vorgeschlagen, welche erfindungsgemäß die im kennzeichnenden Teil des Anspruches 1 genannten Merkmale hat.

Vorteilhafte Ausgestaltungen der Erfindung sind in den weiteren Ansprüchen genannt.

Ein wesentlicher Vorteil des bei der Erfindung verwendeten Kontaktelementes, welches aus einem schraubenförmig verlaufenden Draht mit schrägen Windungen besteht, besteht darin, daß die Neigung der Drahtwindungen die Kombination eines zweckmäßigen Kontaktdruckes mit einem hinsichtlich des Stromübertragungsvermögens optimal dimensionierten Draht ermöglicht.

Die Erfindung ist in erster Linie für die Verwendung von Leiterverbindungen vorgesehen, bei denen die Leiter vorzugsweise konzentrisch zueinander angeordneten sind, wobei man einen elastischen Verband erhält, der neben einer axialen gegenseitigen Beweglichkeit der Leiter auch in radialer Richtung eine gewisse Beweglichkeit der Leiter gegeneinander mit oder ohne Winkelabweichung zwischen den Leitern zuläßt. Verbindungen dieser Art kommen unter anderem in $SF_6$-isolierten Schaltanlagen vor, zum Beispiel zwischen verschiedenen Teilen einer Sammelschiene, in Trennschaltern und Erdungsschaltern usw. Die Erfindung kann jedoch auch mit Erfolg in anderen Zusammenhängen verwendet werden.

Aus der SE-PS 131 239 ist es an sich bekannt, eine ringförmige Schraubenfeder als Kontaktelement zwischen einem metallischen Kabelmantel und einem geerdeten Gerätegehäuse zu verwenden. Bei dieser bekannten Konstruktion, die für stumpf aneinanderliegende Verbindungen vorgesehen ist, ist die Feder jedoch nicht mit schrägen Drahtwindungen ausgebildet, und sie bildet auch keinen Teil des Betriebsstromkreises. Die an das Feder- und Stromleitvermögen gestellten Anforderungen sind daher erheblich geringer als bei der Leiterverbindung gemäß der Erfindung.

Anhand der in den Figuren gezeigten Ausführungsbeispiele soll die Erfindung näher erläutert werden. Es zeigen

Figur 1 eine elastische Leiterverbindung nach der Erfindung zwischen zwei konzentrischen Leitern im Axialschnitt,

Figur 2 ein in der Leiterverbindung nach Figur 1 verwendetes Kontaktelement im Axialschnitt längs der Linie II-II in Figur 1, und zwar vor der Montage des Kontaktelements,

Figur 3a - 3c schematisch drei Schritte bei der Fertigung des Kontaktelementes,

Figur 4 schematisch die Federcharakteristik des Kontaktelementes in einer Anordnung nach der Erfindung,

Figur 5 ein anderes Ausführungsbeispiel einer Anordnung nach der Erfindung im Axialschnitt,

Figur 6 eine andere Ausführungsform eines Kontaktelementes für eine Anordnung nach der Erfindung in stirnseitiger Ansicht,

Figur 7 einen Schnitt längs der Linie VII-VII in Figur 6.

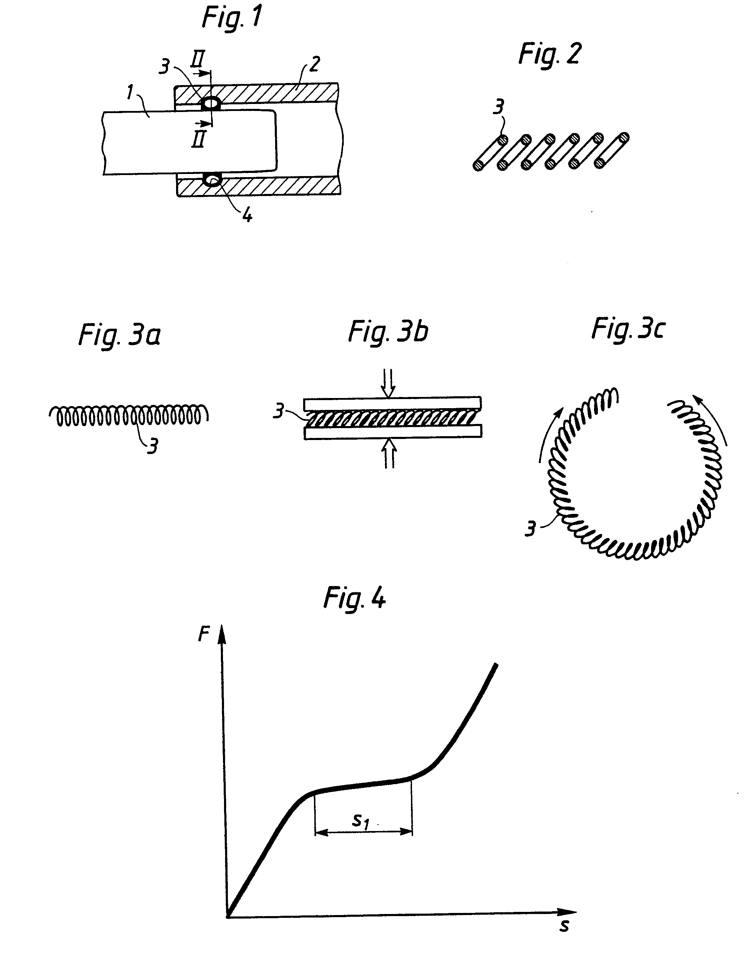

Figur 1 zeigt eine Verbindung zwischen zwei konzentrischen Leitern 1 und 2, die im Verhältnis zueinander axial beweglich sind. Der Leiter 2 ist rohrförmig und umschließt den Endabschnitt des Leiters 1, dessen Außendurchmesser kleiner als der Innendurchmesser des Leiters 2 ist. Die beiden Leiter 1, 2 können beispielsweise einen Phasenleiter einer metallgekapselten, gasisolierten Schaltanlage bilden oder Kontakte in einem Trennschalter oder einem Erdungsschalter sein. Zwischen den beiden Leitern 1, 2 liegt ein federndes Kontaktelement 3, das in einer Ringnut 4 im Innern des Leiters 2 angeordnet ist. Das Kontaktelement 3 besteht aus einem schraubenförmig verlaufenden Draht mit schrägen Windungen, wie es aus Figur 2 hervorgeht.

Das Kontaktelement 3 kann, wie es aus den Figuren 3a - 3c hervorgeht, dadurch hergestellt werden, daß ein Draht aus geeignetem Kontaktmaterial, z.B. einer versilberten Hartkupferlegierung, zunächst zu einer Schraubenspirale mit beispielsweise einem Durchmesser von 10 mm und einer Steigung von ca. dem Zweifachen des Drahtdurchmessers gewickelt wird (Figur 3a). Durch Mangeln, Pressen usw. werden sämtliche Drahtwindungen in eine bestimmte Schräglage zur Längsachse der Spirale gebracht (Figur 3b). Der Neigungswinkel kann zweckmäßig zwischen $30^{o}$ und $60^{o}$ liegen. Danach wird die Spirale zu einer Windung geformt und in der Ringnut 4 im Leiter 2 montiert (Figur 1). Diese Ringnut ist so geformt, daß die Spirale in dem Leiter 2 in Längsrichtung des Leiters fixiert ist und eine geeignete Ausgangslage für die radiale Federungsbewegung bekommt, die für den korrekten Kontaktdruck sorgt. Jede Drahtwindung hat mindestens eine Kontaktfläche mit jedem Leiter und bildet zwei parallele Strompfade zwischen den Leitern.

Figur 4 zeigt schematisch die Federcharakteristik des Kontaktelements 3, wobei s der Federweg und F die Kontaktkraft ist. Wie man sieht, ist die Kontaktkraft in einem verhältnismäßig großen Federwegbereich $s_1$ nahezu konstant. Dies ist sehr vorteilhaft, da man den Arbeitsbereich der Feder in den Bereich $s_1$ legen kann und dadurch von Fertigungstoleranzen nahezu unabhängig wird.

0 164 023

Die das Kontaktelement 3 bildende Spirale braucht nicht
notwendigerweise kreisförmig zu sein; vielmehr können ihre
Windungen oder Schlingen auch elliptisch, quadratisch usw.
ausgebildet sein. Wichtig ist jedoch, daß die Windungen der
Spirale zusammenhängen, d.h. aus einem einzigen Draht
gewickelt sind, und daß alle Windungen eine Anfangsneigung
in derselben Richtung haben.

Das Kontaktelement muß aus einem Material bestehen, das eine
ausreichende Federung bewirkt und eine gute Stromleitfähigkeit hat. Ein geeignetes Material mit diesen Eigenschaften
ist Berylliumkupfer, jedoch kann für bestimmte Anwendungsfälle auch anderes Material wie zum Beispiel Phosphorbronze,
Chromkupfer oder gewöhnliches Kupfer verwendet werden.

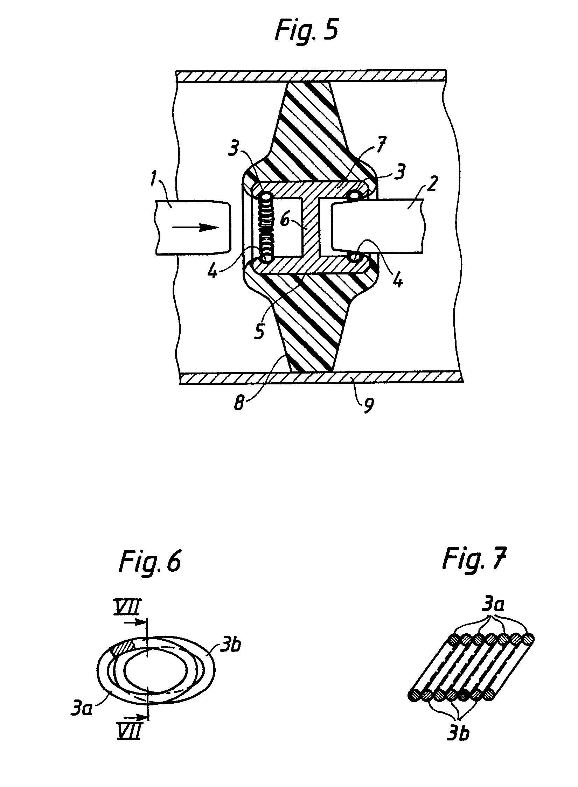

Kontaktverbindungen der hier vorgeschlagenen Art können
vielfältig eingesetzt werden. Figur 5 zeigt eine
Anwendungsform für gasisolierte Schaltanlagen, bei der zwei
koaxial zueinander angeordnete Leiter 1 und 2 mit gleichem
Durchmesser mittels einer Muffe 5 verbunden werden, die mit
Kontaktelementen 3 gemäß der Erfindung versehen ist. Die
Kontaktelemente sind in rundumlaufenden Nuten 4 in den Endabschnitten der Muffe angeordnet. Die Muffe ist als Nabe in
eine aus Isoliermaterial bestehende Stütze 8 eingegossen
oder auf andere Weise montiert, wobei die Stütze 8 in der
rohrförmigen Metallkapselung der Schaltanlage fixiert ist.
Wenn die Stütze 8 gastrennend sein soll, so wird die Muffe 5
mit einer dichten Zwischenwand 6 versehen. Die Leiter 1 und
2 werden von je einer Seite her in die Muffe eingeschoben.
Die Außenwand 7 (Kontakthalter) der Muffe ist nach Art eines
das elektrische Feld steuernden Körpers ausgebildet.

Die Anordnung gemäß der Erfindung kann auch bei zusammengeschraubten Flanschen oder bei der Verbindung rechteckiger
Schienen in langen Schienensträngen verwendet werden, um
eine gewisse axiale Beweglichkeit der Schienen zu ermög-

0 164 023

lichen. Das Kontaktelement kann mit Vorteil auch bei Leitern mit ebenen Kontaktflächen verwendet werden, die axial gegeneinander gepreßt werden (Anpreßkontakt). Eine solche Ausführung ist insbesondere dann geeignet, wenn man eine radiale gegenseitige Verschiebbarkeit der beiden aneinander gepreßten Leiter erreichen möchte. Die Nut für das Kontaktelement braucht in solchen Fällen nicht notwendigerweise rund zu sein; sie kann zum Beispiel gerade sein oder jede beliebige andere Form haben.

Um das Stromübertragungsvermögen der Verbindung zu vergrößern, können mehrere parallele Kontaktelemente der beschriebenen Art verwendet werden, die in je einer Nut angeordnet sind. Um die übertragbare Leistung zu vergrößern, können auch zwei oder mehrere Spiralen in derselben Nut angeordnet werden. Die Figuren 6 und 7 zeigen ein solches Kontaktelement, bei dem zwei Spiralen 3a und 3b ineinander montiert sind, jedoch mit einer gewissen seitlichen Verschiebung, bei der der Abstand zwischen den parallelen Längsachsen der Spiralen größer als der Drahtdurchmesser ist. Dadurch wird die über den Umfang des Leiters zur Verfügung stehende Kontaktfläche bei gleichbleibender Freiheit für die Federungsbewegung in radialer Richtung besser ausgenutzt.

## Patentansprüche

1. Anordnung zur elektrischen Verbindung zweier Leiter (1, 2) mit Hilfe mindestens eines zwischen den Kontaktflächen der Leiter angeordneten federnden Kontaktelementes (3), das in einer Nut (4) in der Kontaktfläche des einen Leiters (2) montiert ist, d a d u r c h   g e k e n n z e i c h n e t, daß das Kontaktelement (3) ein federnder Draht ist, der schraubenförmig oder in ähnlicher Weise in mehreren Windungen um die Längsachse des Kontaktelements gewickelt ist, und daß das Kontaktelement so geformt ist, daß seine Drahtwindungen bereits vor der Montage des Kontaktelements in der Nut (4) eine gewisse Neigung zu der Längsachse des Kontaktelements haben.

2. Anordnung nach Anspruch 1, d a d u r c h   g e k e n n - z e i c h n e t, daß der Neigungswinkel zwischen den Drahtwindungen und der Längsachse des Kontaktelementes zwischen 10 und 80$^{\circ}$, vorzugsweise zwischen 30 und 60$^{\circ}$, liegt.

3. Anordnung nach Anspruch 1 oder 2, bei der die beiden Leiter (1, 2) zueinander konzentrisch angeordnet und im Verhältnis zueinander axial beweglich sind, d a d u r c h   g e k e n n z e i c h n e t, daß das Kontaktelement (3) zu einer Windung geformt und in einer rundumlaufenden Nut (4) in dem einen Leiter (2) angeordnet ist.

4. Anordnung nach Anspruch 1 oder 2, d a d u r c h   g e - k e n n z e i c h n e t, daß die beiden Leiter ebene Kontaktflächen haben und axial gegeneinander gepreßt sind.

5. Anordnung nach einem der vorhergehenden Ansprüche, d a - d u r c h   g e k e n n z e i c h n e t, daß zwei oder mehrere Kontaktelemente (3a, 3b) in derselben Nut (4) angeordnet sind, wobei die Drahtwindungen der Elemente radial gegeneinander verschoben sind.

6. Anordnung nach einem der vorhergehenden Ansprüche, d a - durch gekennzeichnet, daß der Draht, aus dem das Kontaktelement (3) gewickelt ist, aus Kupfer oder einer Kupferlegierung besteht.

7. Anordnung 6, dadurch gekennzeich - n e t, daß der Draht hartgezogen und versilbert ist.

Fig. 1

3
II
1
2
II
4

Fig. 2

3

Fig. 3a

3

Fig. 3b

3

Fig. 3c

3

Fig. 4

F

$s_1$

s

Fig. 5

Fig. 6

Fig. 7